**Europäisches Patentamt**

**European Patent Office**

**Office européen des brevets**

(19)

(11) Veröffentlichungsnummer : **0 395 844 B1**

(12) **EUROPÄISCHE PATENTSCHRIFT**

(45) Veröffentlichungstag der Patentschrift :
**04.11.92 Patentblatt 92/45**

(51) Int. Cl.$^5$ : **G01D 5/34**

(21) Anmeldenummer : **90102926.4**

(22) Anmeldetag : **15.02.90**

(54) **Positionsmesseinrichtung mit Referenzmarken.**

(30) Priorität : **05.05.89 DE 3914739**

(43) Veröffentlichungstag der Anmeldung :
**07.11.90 Patentblatt 90/45**

(45) Bekanntmachung des Hinweises auf die
Patenterteilung :
**04.11.92 Patentblatt 92/45**

(84) Benannte Vertragsstaaten :
**AT CH DE FR GB IT LI**

(56) Entgegenhaltungen :
**EP-A- 0 085 787**
**EP-A- 0 115 572**
**DE-A- 3 039 483**
**DE-A- 3 409 544**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Affa, Alfred, Ing.(grad.)**
**Hochfellnstrasse 6**
**W-8221 Stein/Traun (DE)**

**Beschreibung**

Die Erfindung bezieht sich auf eine Positionsmeßeinrichtung gemäß dem Oberbegriff des Anspruches 1.

Als Beispiel für eine der zahlreichen diesbetreffenden Druckschriften sei die DE-C-30 39 483 genannt. Dort wird eine Positionsmeßeinrichtung beschrieben, bei der den einzelnen Referenzmarken codierte Markierungen zugeordnet sind. Durch Eingabe der entsprechenden Codierung in die Auswerteeinheit kann jede beliebige Referenzmarke über ihre codierte Markierung ausgewählt und zur Wirkung gebracht werden. Deren absolute- auf einen Bezugspunkt bezogene - Position kann durch die Codierung ermittelt werden.

Wenn die absolute Position der ausgewählten Referenzmarke nicht ermittelt zu werden braucht, kann die Auswahl einzelner Referenzmarken auch über optische und/oder magnetische Schaltelemente getroffen werden. Dies ist in der DE-C-25 40 412 sowie in der EP-A-0 085 787 beschrieben.

Eine andere Positionsmeßeinrichtung wird in der DE-A-24 16 212 beschrieben. Dort sind die Referenzmarken abstandscodiert. In der Auswerteeiheit kann durch die inkrementelle Ermittlung des Abstandes zweier Referenzmarken deren absolute - auf einen Bezugspunkt bezogene - Position ermittelt werden.

Darüber hinaus sind noch zahlreiche Varianten aus der Patentliteratur bekannt.

Die Vielfalt der Referenzmarken- Auswahlmöglichkeiten soll dem Käufer von Positionsmeßeinrichtungen - im allgemeinen Werkzeugsmaschinenhersteller - eine individuelle Auswahl ermöglichen.

Für den Hersteller hat diese Typenvielfalt jedoch den Nachteil, daß die Herstellungs- und Lagerhaltungskosten verhältnismäßig hoch sind.

Der Erfindung lag demgemäß die Aufgabe zugrunde, durch Vereinheitlichung der kostenintensiven Baueinheiten der Positionsmeßeinrichtungen die vorgenannten Kosten zu reduzieren, aber dem Kunden die Typenvielfalt zu erhalten.

Diese an sich widersprüchliche Aufgabe wird durch Positionsmeßeinrichtungen mit den Merkmalen des Anspruches 1 gelöst.

In den abhängigen Ansprüchen sind vorteilhafte Ausgestaltungen der Erfindung angegeben.

Die besonderen Vorteile liegen darin, daß die Maßverkörperung alle Informationen für die unterschiedlichen Referenzmarken-Auswertungsarten bereits beinhaltet und daß durch die Betriebsartenumschaltung jederzeit die Art der Auswertung bestimmt werden kann. Das bedeutet, daß einheitliche Maßverkörperungen hergestellt und eingebaut werden können, und daß zum späteren Zeitpunkt gewählt werden kann, ob alle (codierten) Referenzmarken ausgewertet werden sollen, oder ob nur einzelne zur Auswertung gelangen sollen.

Mit Hilfe von Ausführungsbeispielen soll die Erfindung nachstehend anhand der Zeichnungen noch näher erläutert werden.

Es zeigt

Fig. 1A eine Maßverkörperung;
Fig. 1B eine inkrementale Positionsmeßeinrichtung im Schnitt;
Fig. 1C eine Draufsicht auf die Positionsmeßeinrichtung gemäß Figur 1B;
Fig. 1D antiparallel geschaltete Fotoelemente;
Fig. 1E ein Signaldiagramm einer Abtastung mit Fotoelementen gemäß Figur 1D;
Fig. 1F mehrere Fotoelemente;
Fig. 1G ein Signaldiagram einer Abtastung mit Fotoelementen gemäß Figur 1F;
Fig. 2A eine andere Maßverkörperung;
Fig. 2B eine andere Positionsmeßeinrichtung im Schnitt;
Fig. 2C eine Fotoelementeschaltung;
Fig. 2D ein Signaldiagram einer Abtastung mit Fotoelementen gemäß Figur 2C;
Fig. 2E eine weitere Fotoelementeschaltung;
Fig. 2F ein Signaldiagram einer Abtastung mit Fotoelementen gemäß Figur 2E;
Fig. 3A eine weitere Maßverkörperung;
Fig. 3B eine weitere Positionsmeßeinrichtung im Schnitt;
Fig. 3C eine Draufsicht auf die Positionsmeßeinrichtung gemäß Figur 3B;
Fig. 3D eine Fotoelementeschaltung;
Fig. 3E ein Signaldiagram einer Abtastung mit Fotoelementen gemäß Figur 3D;
Fig. 3F eine weitere Fotoelementeschaltung und
Fig. 3G ein Signaldiagramm einer Abtastung mit Fotoelementen gemäß Figur 3F.

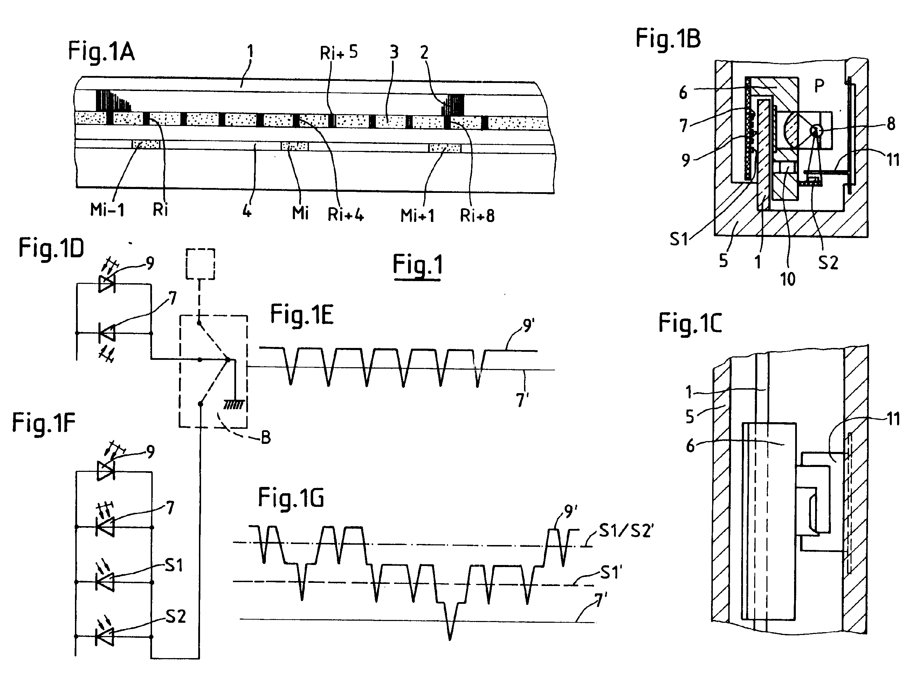

In Figur 1 ist eine inkrementale Positionsmeßeinrichtung P dargestellt, deren Teilabbildungen Einzelheiten und Signaldiagramme enthalten. Figur 1A zeigt eine Maßverkörperung 1 mit mehreren Informations-Spuren. Auf einer der Spuren ist eine inkrementale Meßteilung 2 in Form eines Strichgitters aufgebracht. Eine zweite Spur 3 weist eine Reihe von codierten Referenzmarken $R_i$ (i = 2, 3, ... n) auf, die in einem bestimmten Raster angeordnet sind. Auf einer weiteren Spur, die als Schaltspur 4 bezeichnet wird, sind Markierungen $M_i$ (i = 1,

2, 3, ... n) aufgebracht, die in einem anderen Raster als dem der Referenzmarken Ri angeordnet sind. Das Raster der Markierungen Mi beträgt ein ganzzahliges Vielfaches des Rasters der Referenzmarken Ri. Bei einem praxisnahen Ausführungsbeispiel hat die als Strichgitter ausgebildete Meßteilung 2 eine Teilungsperiode von 20μm, wobei das Strichgitter aus lichtundurchlässigen Strichen und lichtdurchlässigen Lücken gleicher Breite besteht. Der Abstand der Referenzmarken Ri in der zur Meßteilung 2 parallel verlaufenden Spur 3 ist nicht konstant, sondern er ist vielmehr definiert unterschiedlich. So kann durch Auszählen der Meßschritte (Inkremente) von einer Referenzmarke Ri zur nächsten Ri+1 deren absolute Position bestimmt werden. Die Abstände zweier Referenzmarken addieren sich hingegen immer auf einen konstanten Abstand von 20 mm, was bedeutet, daß sich ca. alle 10 mm eine Referenzmarke Ri auf der Spur 3 befindet. Die parallel verlaufende Schaltspur 4, deren Markierungen Mi einen viel größeren Abstand voneinander haben, als die Referenzmarken Ri, wird bereits bei der Herstellung der Maßverkörperung 1 auf diese zusammen mit der Gitterteilung 2 und den Referenzmarken Ri aufgebracht.

In Figur 1B ist eine Positionsmeßeinrichtung P schematisch im Schnitt gezeigt. Die Maßverkörperung 1 ist geschützt im Inneren eines Gehäuses 5 angeordnet. Die in dieser Ansicht nicht sichtbaren Informationsspuren gemäß Figur 1A werden von einer Abtasteinrichtung 6 lichtelektrisch abgetastet. Diese Art der Abtastung ist Stand der Technik und wird nicht näher erläutert. Die Abtasteinrichtung 6 weist u.a. ein Fotoelement 7 auf, dessen Ausgangsspannung von der Beleuchtungsstärke einer Lampe 8 abhängt, die zur lichtelektrischen Abtastung dient. Da diese Ausgangsspannung die Triggerschwelle für die Referenzmarken-Abtastung repräsentiert, wird sie als Gegentaktspannung bezeichnet und das Fotoelement 7 demgemäß als Referenzmarken-Gegentaktfotoelement 7.

Ein weiteres Fotoelement - Referenzmarkenfotoelement 9 genannt - dient zur Abtastung der Referenzmarken Ri in der Spur 3. Ferner sind noch Schaltfotoelemente S1 und S2 vorgesehen, auf die bei der Signaldiagramm-Erläuterung noch näher eingegangen wird.

Figur 1D zeigt die beiden antiparallel geschalteten Fotoelemente 7 und 9 - also das Referenzmarkenfotoelement 9 und das Referenzmarken-Gegentaktfotoelement 7. Beide werden von der Lampe 8 beleuchtet und bei Relativverschiebungen zwischen Abtasteinrichtung 6 und Maßverkörperung 1 entsteht ein Signaldiagramm, wie es in Figur 1E gezeigt ist. Die waagerecht Linie 7′ stellt dabei das Niveau der Triggerschwellenspannung dar, die vom Fotoelement 7 geliefert wird. Das Referenzmarkenfotoelement 9 liefert durch Abtastung der Referenzmarken Ri ca. alle 10 mm einen Impuls dessen Lage durch das vorbeschriebene Auszählen absolut bestimmbar ist, was durch die Linie 9′ veranschaulicht wird. bei dieser Betriebsart werden alle Referenzmarken Ri ausgewertet.

In den Figuren 1F und 1G sind Fotoelementeschaltung und Signaldiagramm einer anderen Betriebsart dargestellt. Zu den Fotoelementen 7 und 9 aus Figur 1D sind weitere Fotoelemente als Schaltfotoelemente S1 und S2 parallel geschaltet.

Diese Umschaltung der Betriebsart kann in der Abtastbaueinheit mit einem Schalter geschehen, aber sie kann auch durch Umlötung der Fotoelemente oder durch einen externen Schaltbefehl erfolgen. Unabhängig von der Ausgestaltung des Betriebsartenumschalters soll von der Erfindung jegliche Umschaltung zwischen mehreren Arten der Referenzmarkenauswertung umfaßt werden.

Durch die zusätzlichen Schaltfotoelemente S1 und S2 wird der Triggerpegel angehoben. Eine zusätzliche Lampe 10 beleuchtet das Schaltfotoelement S1, sodaß der Triggerpegel steigt (gestrichelte waagerechte Linie).Die Beleuchtung vom Schaltfotoelement S1 kann aber bei anderer baulicher Ausgestaltung auch durch die Lampe 8 erfolgen, die hier noch das Schaltfotoelement S2 zusätzlich beleuchtet, was den Triggerpegel nochmals anhebt (strichpunktierte waagerechte Linie). Das zur Auswertung einer Referenzmarke Ri erforderliche Niveau der Triggerschwellenspannung bleibt jedoch durch die Spannung des Referenzmarken-Gegentaktfotoelementes 7 wie ursprünglich erhalten (durchgehende waagerechte Linie).

Referenzmarkenimpulse die oberhalb dieses Niveaus liegen, werden nicht zur Auswertung kommen. Um dieses Niveau überhaupt zu erreichen, ist eine im Gehäuse 5 der Positionsmeßeinrichtung P (Fig. 1B) verschiebbare Blende 11 vorhanden. Derartige Blenden 11 sind aus dem eingangs gewürdigten Stand der Technik an sich bekannt.

Die umgewählte Betriebsart erlaubt nun eine Auswahl von einigen Referenzmarken Rk aus der Reihe von allen Referenzmarken Ri nach folgenden Maßgaben:

An jeder Referenzmarke Ri wird ein Referenzimpuls erzeugt, der aber nicht zur Wirkung kommt, weil durch die beleuchteten Fotoelemente 7, S1 und S2 der Triggerpegel zu hoch liegt.

Parallel zu den Referenzmarken Ri sind in der Schaltspur 4 bei einigen Referenzmarken Ri, Ri+4, Ri+8 u.s.w. Markierungen Mi-1, Mi, Mi+1 aufgebracht. Beim Abtasten einer solchen Markierung Mi sinkt der Triggerpegel, da das zugehörige Schaltfotoelement S1 abgedunkelt wird. Ein Referenzimpuls kommt dennoch nicht zur Wirkung, da die Triggerschwelle noch nicht erreicht wird.

Die Blende 11 kann einer der Markierungen (oder mehrere Blenden mehreren Markierungen) Mi zugeord-

3

net werden, dann wird beim Abtasten auch deren zugehöriges Schaltfotoelement S2 abgedunkelt und der Triggerpegel sinkt so weit, daß der Referenzimpuls Ri+8 die Triggerschwelle überschreitet und zur Wirkung gelangt.

Diese Betriebsart erscheint auf Anhieb umständlich, wenn nicht sogar überflüssig, denn der Fachmann könnte ja einzelnen Referenzmarken Ri in bewährter Weise gleich Blenden 11 oder dergleichen zuordnen.

Diese Möglichkeiten sind jedoch durch die Aufgabenstellung mit dem bekannten Mitteln nicht realisierbar, da einerseits abstandscodierte Referenzmarken in Standard-Bauweise und andererseits freie Referenzmarkenauswahl mit einfachen Mitteln gefordert sind.

Blenden oder Magnetschalter haben aufgrund ihrer Bauweise eine Schaltcharakteristik, die es nicht ermöglicht, sie einzelnen Referenzmarken Rk selektierend zuzuordnen, wenn diese in der beschriebenen Weise abstandscodiert sind. Deshalb werden bereits bei der Herstellung der Maßverkörperung 1 den Referenzmarken Ri Markierungen Mi zugeordnet, bei denen später die Auswahl mittels Blenden oder dergleichen möglich ist. Die Markierungen Mi haben deshalb einen viel größeren Abstand zueinander als die Referenzmarken Ri. Auf diese Weise wird eine Maßverkörperung 1 geschaffen, die es später ermöglicht, entweder die abstandscodierten Referenzmarken Ri, oder aber Referenzmarken eines anderen Rasters z. B. Ri+4 auszuwerten. Darüber hinaus läßt sich aus den Referenzmarken mit dem Raster Ri+4, das dem Raster der Markierungen Mi entspricht nochmals eine Auswahl treffen. Der Anwender hat also mindestens drei Möglichkeiten, Referenzmarken auszuwählen, während der Hersteller nur einen Typ von Maßverkörperungen 1 herstellen muß.

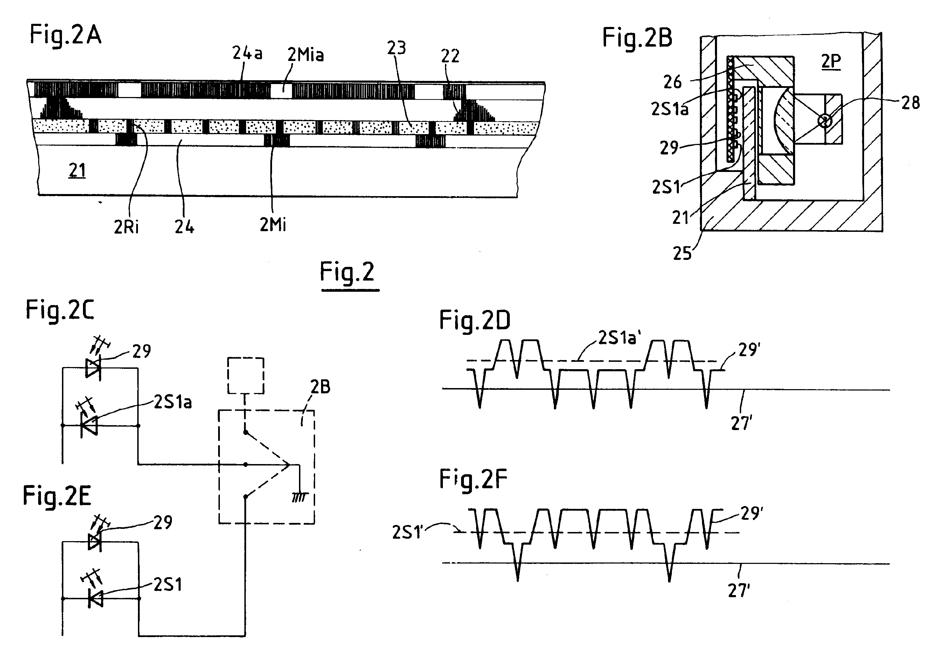

In Figur 2 ist eine Variante einer Positionsmeßeinrichtung 2P gezeigt. Zur Straffung der Beschreibung werden grundsätzliche Aussagen zur Erfindung nicht wiederholt; durch die Analogie kann auf die Beschreibung zur Figur 1 verwiesen werden. Gleichartige Bauelemente tragen das in Figur 1 angezogene Bezugszeichen, dem der Figurenindex "2" bzw. "3" voran gestellt wird.

Eine Maßverkörperung 21 weist eine weitere Schaltspur 24a auf. Im Gegensatz zur Schaltspur 24, die in einem bestimmten Raster Markierungen 2Mi aufweist, die ihr zugehöriges Schaltfotoelement 2S1 bei der Abtastung abdunkeln, dunkelt die Schaltspur 24a ihr zugehöriges Schaltfotoelement 2S1a immer ab, nur in dem besagten Raster der Markierungen 2Mia wird es beleuchtet. Diese Schaltspur 24a stellt sozusagen das Komplement zur Schaltspur 24 dar. Je nach Betriebsartenumschaltung führt dies zu Signaldiagrammen, wie sie in den Figuren 2D und 2F gezeigt sind.

Es versteht sich, daß auch bei dieser Variante die Möglichkeit besteht, einzelnen, vorausgewählten Referenzmarken 2Ri eine Blende oder dergleichen zuzuordnen. Ferner besteht natürlich auch hier die Möglichkeit, die Betriebsart zu wählen, bei der alle Referenzmarken 2Ri ausgewertet werden.

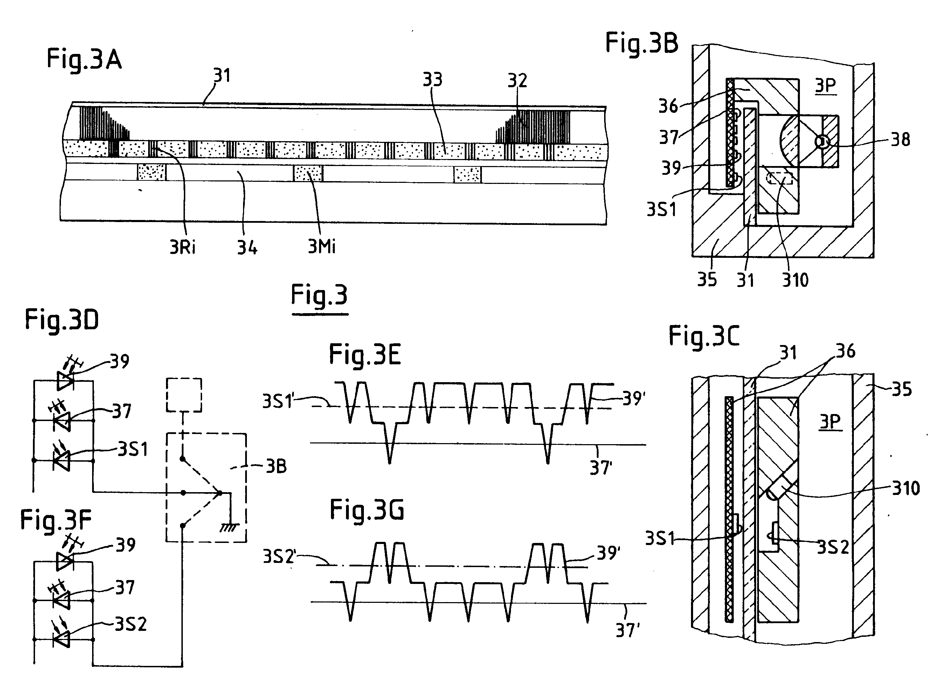

In Figur 3 ist eine Positionsmeßeinrichtung 3P gezeigt, bei der eine Komplementbildung ähnlich wie im Beispiel aus Figur 2 mit nur einer Schaltspur 34 durchgeführt wird. Die Schaltspur 34 is dazu so ausgebildet, daß die Markierungen 3Mi reflektierend und die Zwischenräume lichtdurchlässig sind.

Zur Signalgewinnung ist ein Schaltfotoelement 3S1 für die lichtdurchlässigen Bereiche der Schaltspur 34 auf der der Lampe 38 gegenüberliegenden Seite der Maßverkörperung 31 angebracht. Für die reflektierenden Markierungen 3Mi befindet sich hingegen ein Schaltfotoelement 3S2 auf der gleichen Seite der Maßverkörperung 31, wie die zugehörige Lampe 38. Es kann auch eine separate Beleuchtung in Form einer lichtemitierenden Diode 310 vorgesehen werden.

Je nach Betriebsarten-Umschaltung werden die Signaldiagramme gemäß Figure 3E oder 3G erzeugt.

Selbstverständlich sind auch bei dieser Ausführungsform die anderen bereits beschriebenen Betriebsarten auswählbar, und es gilt für alle Beispiele, daß auch eine Betriebsart gewählt werden kann, in der überhaupt keine Referenzmarke ausgewertet wird.

Da der Betriebsarten-Umschalter - wie bereits erläutert wurde - beliebig ausgebildet sein kann, ist er nur symbolisch als Umschalter B, bzw. 2B und 3B dargestellt und seine elektrische Beschaltung hängt von der Bauart ab.

Da durch die codierten Referenzmarken aus den inkrementalen Positionsmeßeinrichtungen gemäß der Ausführungsbeispiele quasi-absolute Positionsmeßeinrichtungen werden, ist die Erfindung auch nicht auf inkrementale Positionsmeßeinrichtungen beschränkt.

Bezugszeichenliste

| | |
|---|---|
| P, 2P, 3P | Positionsmeßeinrichtung |
| 1, 21, 31 | Maßverkörperung |
| 2, 22, 32 | Meßteilung |
| 3, 23, 33 | Referenzmarkenspur |
| 4, 24, 34 | Schaltspur |
| 24a | Komplement-Schaltspur |

EP 0 395 844 B1

| | |
|---|---|
| Ri, 2Ri, 3Ri | Referenzmarken |
| Mi, 2Mi, 3Mi | Markierungen |
| 2Mia | Komplement-Markierungen |
| 5, 25, 35 | Gehäuse |
| 6, 26, 36 | Abtasteinrichtung |
| 7, 27, 37 | Referenzmarken-Gegentaktfotoelement |
| 8, 28, 38 | Lampe |
| 9, 29, 39 | Referenzmarkenfotoelement |
| 10, 310 | Zusatzbeleuchtung |
| S1, 2S1, 2S1a, 3S1 | Schaltfotoelement |
| S2, 2S2, 3S2 | Schaltfotoelement |

## Patentansprüche

1. Inkrementale Positionsmeßeinrichtung (P) mit einer eine Meßteilung (2) tragenden Maßverkörperung (1), die wenigstens eine Reihe von Referenzmarken (Ri) aufweist, wobei einem Teil der Referenzmarken (Ri) Markierungen (Mi) zur Auswahl von Referenzmarken (Ri) zugeordnet sind, sowie mit einer Auswerte- und einer Abtasteinrichtung (6) zum Abtasten der Maßverkörperung (1) und zur Erzeugung von Referenzmarkenimpulsen, dadurch gekennzeichnet, daß ein Betriebsarten-Umschalter (B, 2B, 3B) für mehrere Schaltzustände vorgesehen ist, mit dem die Betriebsarten
   a) Auswertung aller Referenzmarken (Ri) und
   b) Auswertung nur der markierten oder der nicht markierten Referenzmarken (Ri, Ri+4, Ri+8)
   auswählbar sind, wobei für die Betriebsart b) Schaltelemente (11; S1, S2; 2S1a, 2S1; 3S1, 3S2) vorgesehen sind, die eine Verschiebung des Triggerpegels der Referenzmarkenimpulse abhängig von der Anordnung der Markierungen (Mi, 2Mi, 2Mia, 3Mi) bewirken.

2. Inkrementale Positionsmeßeinrichtung nach Anspruch 1, dadurch gekennzeichnet, daß die Markierungen (Mi, 2Mi, 2Mia, 3Mi) bei der Herstellung der Maßverkörperung (1, 21, 31) vorwählbar auf diese aufgebracht werden und daß den Markierungen zur endgültigen Auswahl der Referenzmarken optische und-/oder magnetische Schaltelemente (11; S1, S2; 2S1a, 2S1; 3S1, 3S2) in der Abtasteinrichtung (6, 26, 36) zugeordnet sind.

3. Inkrementale Positionsmeßeinrichtung nach Anspruch 1, dadurch gekennzeichnet, daß die Markierungen (Mi, 2Mi, 2Mia, 3Mi) auf zur Meßteilung (2, 22, 32) parallelen Schaltspuren (4, 24, 24a, 34) angeordnet sind.

4. Inkrementale Positionsmeßeinrichtung nach Anspruch 3, dadurch gekennzeichnet, daß die Schaltspuren (4, 24, 24a) aus lichtdurchlässigen (2Mia) und lichtundurchlässigen Bereichen (Mi, 2Mi, 24a) bestehen.

5. Inkrementale Positionsmeßeinrichtung nach Anspruch 3, dadurch gekennzeichnet, daß die Schaltspur (34) aus lichtdurchlässigen und reflektierenden Bereichen (3Mi) besteht.

## Claims

1. An incremental position-measuring device (P) with a measurement device (1) carrying a measurement scale division (2), said measurement device (1) having at least one row of reference marks (Ri), there being associated with one portion of the reference marks (Ri), marks (Mi) for selection of reference marks (Ri), and with an evaluation and a scanning device (6) in order to scan the measurement device (1) and to generate reference mark pulses, characterised in that an operational-mode switch (B, 2B, 3B) is provided for a plurality of circuit conditions, by means of which the operational modes:
   a) evaluation of all reference marks (Ri) and
   b) evaluation only of the marked or of the non-marked reference marks (Ri, Ri+4, Ri+8)
   may be selected, switching elements (11; S1; S2; 2S1a, 2S1; 3S2) being provided which effect a displacement in the triggering level of the reference mark pulses in dependence on the disposition of the marks (Mi, 2Mi, 2Mia, 3Mi).

5

**2.** An incremental position-measuring device according to Claim 1, characterised in that the marks (Mi, 2Mi, 2Mia, 3Mi) may be applied in a preselectable fashion to the measurement device (1, 21, 31) during its manufacture, and in that, for final selection of the reference marks, there are associated with the marks optical and/or magnetic switching elements (11; S1, S2; 2S1a, 2S1; 3S1, 3S2) in the scanning device (6, 26, 36).

**3.** An incremental position-measuring device according to Claim 1, characterised in that the marks (Mi, 2Mi, 2Mia, 3Mi) are disposed on switching tracks (4, 24, 24a, 34) parallel with the measuring scale division (2, 22, 32).

**4.** An incremental position-measuring device according to Claim 3, characterised in that the switching tracks (4, 24, 24a) comprise translucent and opaque areas (Mi, 2Mi, 24a).

**5.** An incremental position-measuring device according to Claim 3, characterised in that the switching track (34) comprises translucent and reflective areas (3Mi).


## Revendications

**1.** Dispositif de mesure de position (P) incrémental comportant une mesure matérialisée (1) qui porte une graduation de mesure (2) et présente au moins une suite de repères de référence (Ri), des repères (Mi-)étant associés à une partie des repères de référence (Ri) pour la sélection de repères de référence, ainsi qu'un dispositif de lecture (6) et un dispositif d'exploitation pour la lecture de la mesure matérialisée (1) et la production d'impulsions correspondant aux repères de référence, caractérisé par le fait qu'il est prévu un commutateur de mode de fonctionnement (B, 2B, 3B) pour différents états de commutation qui permet de sélectionner les modes de fonctionnement
    a) exploitation de tous les repères de référence (Ri) et
    b) exploitation exclusivement des repères de référence repérés ou des repères de référence non repérés (Ri, Ri+4, Ri+8),
    des éléments de commutation ( 11; S1, S2; 2S1A, 2S1; 3S1,3S2) étant prévus pour le mode de fonctionnement b), lesquels éléments de commutation provoquent un déplacement du niveau de déclenchement des impulsions de repères de référence en fonction de la disposition des des repères (Mi, 2Mi, 2Mia, 3Mi).

**2.** Dispositif de mesure de position incrémental selon la revendication 1, caractérisé par le fait que les repères (Mi, 2Mi, 2Mia, 3Mi) sont appliqués de manière préétablie sur la mesure matérialisée (1, 21, 31) lors de la fabrication de celle-ci et que des moyens de commutation optiques et/ou magnétiques (11; S1, S2; 2S1A, 2S1; 3S1, 3S2) sont associés aux repères dans le dispositif de lecture (6, 26, 36) pour la sélection définitive des repères de référence.

**3.** Dispositif de mesure de position incrémental selon la revendication 1, caractérisé par le fait que les repères (Mi, 2Mi, 2Mia, 3Mi) sont appliqués sur des pistes de commutation (4, 24, 24a, 34) parallèles à la graduation de mesure (2, 22, 32).

**4.** Dispositif de mesure de position incrémental selon la revendication 3, caractérisé par le fait que les pistes de commutation (4, 24, 24a) sont formées de zones transparentes (2Mia) et de zones non transparentes (Mi, 2Mi 24a).

**5.** Dispositif de mesure de position incrémental selon la revendication 3, caractérisé par le fait que la piste de commutation (34) est formée de zones transparentes et de zones réfléchissantes (3Mi).

Fig.1A

Fig.1B

Fig.1C

Fig.1D

Fig.1E

Fig.1F

Fig.1G

Fig.1

1, 2, 3, Ri+5, Ri, Ri+8, Mi-1, Mi, Mi+1, 4

P, 6, 7, 9, 8, 11, S2, 10, 1, 5, S1

11, 1, 5, 6

9, 7, B, 9, 7, S1, S2

9', 7', 9', S1/S2', S1', 7'

Fig.2A

Fig.2B

Fig.2

Fig.2C

Fig.2D

Fig.2E

Fig.2F

EP 0 395 844 B1

Fig.3A

Fig.3B

Fig.3

Fig.3D

Fig.3E

Fig.3G

Fig.3F

Fig.3C

EP 0 395 844 B1